# EUROPÄISCHE PATENTSCHRIFT

(11) **EP 1 657 794 B1**
(45) Veröffentlichungstag und Bekanntmachung des Hinweises auf die Patenterteilung: **16.03.2011**
(21) Anmeldenummer: 05024242.9
(22) Anmeldetag: 08.11.2005
(51) Int. Cl.: H02G 3/04, H01R 13/46

(54) **Endverschluss für Kabel und Rohre**
End closing for cable or tubing
Fermeture terminale pour câble ou tube.

(30) Priorität: 10.11.2004 DE 102004054237
(43) Veröffentlichungstag der Anmeldung: 17.05.2006
(73) Patentinhaber: gabo Systemtechnik GmbH, 94559 Niederwinkling (DE)
(72) Erfinder: Bauer, Peter, 94357 Konzell (DE); Lederer, Roland, 94374 Schwarzach (DE); Karl, Markus, 94327 Bogen (DE)

(56) Entgegenhaltungen:
- EP-A- 0 392 089
- DE-A1- 4 135 997

## Beschreibung

Die Erfindung bezieht sich auf einen Endverschluss für Rohre- oder Kabel mit einem Kennzeichnungsfeld.

Solche Endverschlüsse sind an sich bekannt. Unter anderem ist eine Endhülse für ein elektrisches Kabel aus der DE 41 35 997 A1 bekannt geworden, die aus einem elektrisch leitenden Teil, der mit einem leitenden Kern des Kabels verbindbar ist und ein Beschriftungsfeld auf einem Isolierkörper trägt, wobei diese wiederum eine verlängerbare Muffe aufweist, die drehbar angeordnet ist. Eine weitere Kabelschelle ist aus der DE 197 24 343 A1 bekannt geworden. Auch diese Kabelschelle weist eine Befestigungsmöglichkeit für die Kabelkennzeichnung auf, dabei ist ein Befestigungsmittel vorgesehen, um das ein Oberteil der Kabelschelle drehbar angeordnet, d.h. verschiebbar ist.

Derartige Endhülsen für elektrische Kabel sind mit gewissen Nachteilen behaftet, sie sind einerseits, wenigstens teilweise, elektrisch leitend ausgebildet und andererseits nur für einen bestimmten Kabeldurchmesser brauchbar und sie sind nicht geschlossen, sodass Schmutz und Feuchtigkeit in das zunächst offene Kabel- bzw. Rohrende eindringen können.

Der Erfindung, wie sie in den Ansprüchen beschrieben ist liegt daher die Aufgabe zugrunde, einen solchen Endverschluss für Rohre und Kabel zu schaffen, der ein Beschriftungsfeld besitzt, das drehbar auf dem Kabel bzw. Rohr angeordnet ist und verschiedene Aussendurchmesser von Kabeln und Rohren überbrücken kann, sowie die Kabelenden bis zur Endmontage vor Schmutz und Feuchtigkeit schützt.

Die mit der Erfindung erzielten Vorteile liegen insbesondere in der wenig arbeitsintensiven Anbringung des Endverschlusses und Anpassungsfähigkeit an unterschiedliche Rohr- und Kabeldurchmesser, sowie seiner Drehbarkeit auf den Rohr- oder Kabelenden.

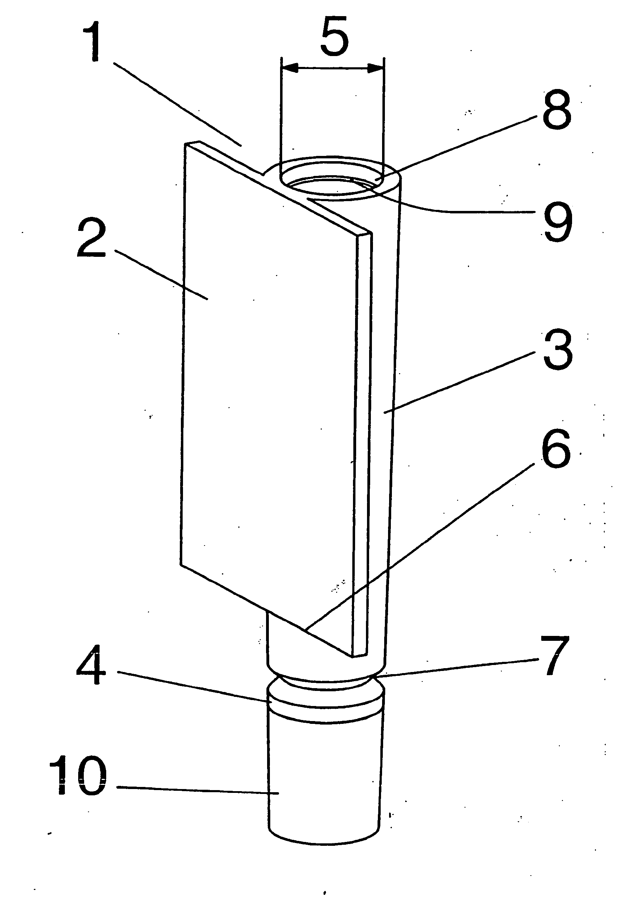

Die Erfindung ist nachstehend anhand eines in der Abbildung dargestellten Ausführungsbeispieles erläutert.

Wie aus der Abbildung ersichtlich, ist der Endverschluss (3) als topfförmiger Körper ausgebildet und wird über das Ende eines Rohres oder Kabels geschoben. Das Beschriftungsfeld (2) ist fest mit dem Rohrverschluss (3) verbunden und kann damit nicht verloren gehen. Der Endverschluss (3) weist einen Boden (4) auf, sein Durchmesser (5) kann sich zum Boden hin verringern, das Rohr- bzw. Kabelende wird somit durch den einseitig offenen Rohrverschluss (3) gegen Schmutz und Wasser verschlossen, sein sich verringernder Innendurchmesser führt zu einem Klemmen des Rohrverschlusses (3) auf dem Rohr bzw. Kabel und damit zu einem einfachen Verschluss.

Der Kragen (10) des Endverschlusses (3) überragt den Rand (6) des Beschriftungsfeldes (2) etwa um die ein- bis fünffache Länge des Durchmessers. Zwischen dem Rand (6) des Beschriftungsfeldes (2) und dem Boden (4) des Endverschlusses (3) ist eine Schwächung (7) der Wand desselben vorgesehen. Durch ein Abknicken oder Abtrennen des Bodens (4) mit dem Kragen (10) im Bereich der Schwächung (7) kann das Beschriftungsfeld (2) mit dem verbleibenden etwa zylindrischen Teil des Endverschlusses (3) auf das Rohr bzw. Kabel geschoben werden und das geschützte Rohr bzw. Kabelende wird frei und nutzbar.

Die Anordnung von Ringen (9) oder eines Gewindes in Umfangsrichtung auf der Innenfläche (8) des Endverschlusses (3) ermöglicht die Überbrückung von unterschiedlichen Durchmessern des Endverschlusses und Rohr bzw. Kabel, sowie die Verwendung eines weicheren Werkstoffes für das Kennzeichnungsschild (1).

Setzt man einen Ring (9) aus z.B. einem elastomeren Werkstoff ein, der z.B. in einer umlaufenden Nut angeordnet sein kann, lässt sich die Dichtwirkung des topfförmigen Körpers (3) noch zusätzlich erhöhen.

### Bezugszeichen

- (1): Kennzeichnungsschild
- (2): Beschriftungsfeld
- (3): Endverschluss
- (4): Boden
- (5): Stirnseitige Öffnung
- (6): Rand des Beschriftungsfeldes
- (7): Wandschwächung
- (8): Innenfläche
- (9): Ring
- (10): Kragen

## Patentansprüche

1. Endverschluss für Kabel und Rohre mit einem Beschriftungsfeld, **dadurch gekennzeichnet, dass** tangential am zylindrischen Endverschluss (3) mit einer stirnseitigen Öffnung (5) und einem Boden (4) ein Kennzeichnungsschild (1) vorgesehen ist, das ein Beschriftungsfeld (2) trägt und dass zwischen dem Boden (4) des Endverschlusses (3) und dem Rand (6) des Beschriftungsfeldes eine Schwächung (7) der Wand des Endverschlusses (3) vorgesehen ist, und dass der Kragen (10) des Endverschlusses (3) den Rand (6) des Beschriftungsfeldes etwa um die ein- bis fünffache Länge seines Außendurchmessers überragt.

2. Rohr- oder Kabelendverschluss nach Anspruch 1, **dadurch gekennzeichnet, dass** auf der Innenfläche (8) des Rohrverschlusses (3) in Umfangsrichtung einer oder mehrere elastomere Ringe (9) oder ein Gewinde vorgesehen sind.

3. Rohr- oder Kabelendverschluss nach Anspruch 1 und 2, **dadurch gekennzeichnet, dass** sich der Innen-Durchmesser der stirnseitigen Öffnung (5) zum Boden (4) hin wenigstens in einem Teilbereich verjüngt.

4. Rohr- oder Kabelendverschluss nach Anspruch 1 bis 3, **dadurch gekennzeichnet, dass** der Endverschluss aus Kunststoff gefertigt ist und keine metallischen Bestandteile enthält.

## Claims

1. End closing for cables and pipes with a labelling panel, **characterised in that** an identification plate (1) is provided tangentially on the cylindrical end closing (3) with a front-side opening (5) and a base (4) and bears a labelling panel (2), and **in that** a weakened portion (7) of the wall of the end closing (3) is provided between the base (4) of the end closing (3) and the edge (6) of the labelling panel, and **in that** the collar (10) of the end closing (3) protrudes beyond the edge (6) of the labelling panel by approximately one to five times the length of the outer diameter thereof.

2. Pipe or cable end closing according to Claim 1, **characterised in that** one or more elastomeric rings (9) or a thread are provided on the inner surface (8) of the pipe closure (3) in a circumferential direction.

3. Pipe or cable end closing according to Claims 1 and 2, **characterised in that** the inner diameter of the front-side opening (5) tapers towards the base (4), at least in a subregion.

4. Pipe or cable end closing according to Claims 1 to 3, **characterised in that** the end closing is manufactured from plastic and does not contain any metallic components.

## Revendications

1. Obturateur d'extrémité pour câbles et tubes comportant une zone d'inscription, **caractérisé en ce qu'**une plaquette d'identification (1) est prévue dans le sens tangentiel sur l'obturateur cylindrique d'extrémité (3) présentant une ouverture frontale (5) et un fond (4), laquelle plaquette d'identification comportant une zone d'inscription (2), et **en ce qu'**un amincissement (7) de la paroi de l'obturateur d'extrémité (3) est prévu entre le fond (4) de l'obturateur d'extrémité (3) et le bord (6) de la zone d'inscription, et **en ce que** le col (10) de l'obturateur d'extrémité (3) dépasse du bord (6) de la zone d'inscription d'une valeur égale à environ une à cinq fois son diamètre extérieur.

2. Obturateur d'extrémité de tube ou de câble conformément à la revendication 1, **caractérisé en ce qu'**une ou plusieurs bagues en élastomère (9) ou un filetage sont prévus sur la surface intérieure (8) de l'obturateur de tube (3) dans le sens circonférentiel.

3. Obturateur d'extrémité de tube ou de câble conformément aux revendications 1 et 2, **caractérisé en ce que** le diamètre intérieur de l'ouverture frontale (5) s'amincit en direction du fond (4) au moins sur une partie.

4. Obturateur d'extrémité de tube ou de câble conformément aux revendications 1 à 3, **caractérisé en ce que** l'obturateur d'extrémité est réalisé en matériau synthétique et qu'il ne contient pas de composants métalliques.
